# EUROPEAN PATENT APPLICATION

(11) **EP 2 302 605 A1**
(43) Date of publication of application: **30.03.2011**
(21) Application number: 09382182.5
(22) Date of filing: 24.09.2009
(51) Int. Cl.: G08B 21/04

(54) **Assembly and method for monitoring a set of household appliances**

(71) Applicant: BSH Electrodomésticos España, S.A., 31620 Huarte (Navarra) (ES)
(72) Inventor: Arozarena Redin, Alberto, 31014, Pamplona (ES); Asensio Gimeno, Angel, 50014, Zaragoza (ES); Blasco Marin, Ruben Cristobal, 50018, Zaragoza (ES); Casas Nebra, Roberto Jose, 50004, Zaragoza (ES); Falco Boudet, Jorge Luis, 50018, Zaragoza (ES); Grout, Vic, Penycae (Wrexham), LL14 2PN (GB); Ibarz Garcia, Alejandro, 50006, Zaragoza (ES); Marco Marco, Alvaro, 50014, Zaragoza (ES); Picking, Richard, Wrexahm, LL12 8DH (GB); Roy Yarza, Armando, 50007, Zaragoza (ES)

(57) **Abstract**

The invention refers to an assembly for monitoring a set of household appliances (1, 3, 5, 7) each of which comprises a control unit (9) which can detect operational and/or product parameters (S₁ to S₁₄) of the household appliances (1, 3, 5, 7). According to the invention, the household appliances (1, 3, 5, 7) are linked to a central monitoring unit (19) which generates a user profile (21) on the base of said operational and/or product parameters (S₁ to S₁₄) detected by the control units (9) of the household appliances (1, 3, 5, 7). In said user profile (21) said parameters (S₁ to S₁₄) are stored depending on the time (t). Therefore, on the base of said user profile (21) the handling of the household appliances (1, 3, 5, 7) by the user can be simplified.

## Description

The invention concerns an assembly for monitoring household appliances according to the preamble of claim 1 and a method according to claim 17.

Operating and managing household appliances in an easy way is of essence especially for elder people with or without disabilities in order to carry out a longer independent life. Therefore, especially advanced household appliances can be equipped with additional functions which detect information about the operation of said household appliance as well as about products, like food or other goods, introduced into the household appliance. Such information can be indicated in a display unit of the household appliance.

From the KR 102007098170-A a generic home control is known. This is a system for managing the home environment by using a home network and a method thereof in order to maintain a surrounding environment and to enable a resident to recognize easily a current surrounding environment by notifying the resident of the current surrounding environment. From another prior art document another remote control home service system is known. This is a home service system for supporting an ubiquitous environment by using an open platform in order to process a user's request and the service transmission corresponding to the request in real time by providing a service platform and to enable a qualified remote management for an electric home appliance, a user's terminal and an embedded device. Moreover, from the KR 102007098170-A a system for managing home environment is known. This is a system for managing home environment by using a home network and a method thereof.

From the KR 102008019901-A a washing machine is known which has a washing machine remote control system for use in e.g. bathroom, has communication modules installed at portable remote control unit, which monitors driving information of washing machine and sends operation commands to the washing machine.

From the KR 102008035097-A a fridge with infrared communication is known which involves transmitting character data in infrared ray signal by using function buttons of remote controller, and receiving infrared ray signal through infrared ray receiving unit.

From the WO 2007115794 A1 a fridge with GSM/GPRS communication is known. This food refrigerator controlling and monitoring system has a control unit checking and storing a set of functioning parameters of food refrigerator, and communication unit connecting a system to external device.

From the KR 102008021508-A a wireless interface is known. The wireless radio frequency communication interface for home electronic device, e.g. refrigerator, can be used in a building automation network system and comprises an apparatus communication unit transceiving message of home appliance.

From the CN 201035721-Y an intelligent remote controller for household appliance is known. It uses a signal-transmitting circuit as an infrared signal-transmitting circuit, ultrasonic signal-transmitting circuit radio frequency (RF) signal-transmitting circuit or audio signal-transmitting circuit.

From the KR 102006058608-A an apparatus and a method for remotely controlling an electric home appliance is known. This is an apparatus and a method for remotely controlling an electric home appliance by using broadcast data in a home network environment are provided to easily support a large scale electric home appliance control environment in a broadcast receiving environment.

From the EP 1548679 A2 a monitoring system for home appliance is known. This system has remote controller provided at indoor space, that communicates with communication module and receives monitoring information of home appliance; e.g. washing machine and dryer.

The closest inventions are just single white goods (mainly washing machines and fridges) with communication capabilities and being able to inform about their status and allowing remote control.

There are also complete systems for the management of environment using different communication means and some intelligence. All of these systems are focused on the connection of different devices and white goods to an intelligent device that acts as a gateway that offers the possibility of communicating with them by mobile phone, internet or other interfaces. Thus, it is possible to get information about devices, change their settings or manage program cycles. Nevertheless, this is done without any adaptation to the user preferences, habits or disabilities.

The object of the invention is to provide an assembly and a method for monitoring or managing household appliances such that especially elder people with or without disabilities can maintain a housekeeping which is essentially independent from external carers.

The object is solved by the features of claim 1. Preferred further developments of the invention are disclosed in the dependent claims.

According to the characterizing part of claim 1 the household appliances are linked to a central monitoring unit. Said monitoring unit generates a user profile on the base of said operational and/or product parameters detected by said control units of the household appliances. In said user profile the operational and/or product parameters are stored depending on the time. By means of the user profile the handling of said household appliances can be simplified.

On the base of the user profile the monitoring unit can derive information about the usage of the household appliances. Thus, the monitoring unit learns about the user's habits (the most common washing programs, cooking schedules, etc.). Considering these habits and the information the monitoring unit has about the user, it facilitates the use of the household appliances. For example, if the user usually starts the preparation of the dinner at certain hours, and no interaction with household appliances has been detected (fridge door not opened, hob not used, etc.), then the monitoring unit might warn the user.

The main advantages of the invention are as follows: Besides allowing the classical way of interaction with the white goods, thanks to the communication capability of the white goods, there is an intelligent device that aggregates all the white goods offering the user an adapted way to manage them. The intelligent device has the ability to learn about the user habits, preferences and abilities. Based in the information that the intelligent device has, it is able to facilitate the use of the white goods to the user. Based in the information that the intelligent device has, it is able to supervise the user operation of white goods and warn him/her when not proper use of white goods is happening. Based in the information that the intelligent device has, it is able to detect when the user has some oversights.

In an embodiment of the invention, the monitoring unit may be integrated directly within one of said household appliances. Thus, the monitoring of the user profile has to be conducted directly at said household appliance. In contrast thereto, it may be preferred if the monitoring unit is not directly attached to one of the household appliances, but located remotely from said household appliances.

Furthermore, it may be of an advantage if a signal transmission between the monitoring unit and said household appliances takes place in a bi-directional way for example using powerline, through the mains, by radio frequency or by any other wireless connection.

In order to further facilitate the handling of the household appliances said monitoring unit may automatically configure the operational settings of the household appliances on the base of the user profile. This can be especially done if the user habits, the time of the day, the day of the week and/or the date are considered.

The term "product" according to the present invention refers to any kind of goods which may be introduced into the household appliances, e.g. food to be introduced into the refrigerator. Alternatively, it can also be referred to laundry to be introduced into a washing machine or to food to be cooked in a microwave oven.

Moreover, the monitoring unit may also generate suggestions of the settings of the household appliances. In that way, the user can just check the selection suggested by the monitoring unit and can accept or change this selection.

Furthermore, the monitoring unit may inform the user about specific configurations of the household appliances. Besides the proper displays which are integrated within the household appliances, the monitoring unit may also use voice to read the configuration, can use the television to show more clearly the configuration, etc.

In addition, the monitoring unit may although generate a warning signal if the status of operation of said household appliances deviates from said user profile. So as to enable a remote control of said household appliances the monitoring unit may comprise operational and/or display elements. In this way, said household appliances can be operated without directly actuating the operational elements on the control panel of the household appliances.

Apart from that, each of said household appliances may also comprise operational and/or display elements by which said household appliances may be operated without using said monitoring unit.

It is preferred to locate the monitoring unit separately from said set of household appliances. To this end, the signal transmission between said monitoring unit and said household appliances may take place wirelessly.

The operational and/or product parameters to be considered for the user profile have to be sufficiently suitable for a statistical analysis as well as for a feedback of the behaviors and habits of the user. In case of a refrigerator a target temperature, information about a door opening (time, frequency) as well as information about inserting/removing products may be used as operational and/or product parameters.

In case of a cooking device information about the heat output defined by the user or information about the cooking program set by the user or the like may be used as operational and/or product parameters. In case of a washing machine the washing program, the rotational speed or the like set by the user may be taken as operational parameters. In case of a dish washer the selected washing program or information about the dishes to be washed can be taken as operational and/or product parameters.

In order to support a safe handling of said household appliances the monitoring unit may be linked to a safety sensor by which at least one emergency parameter can be detected. Said emergency parameter may comprise information about fume, fire or flood in the kitchen. In addition or alternatively, the monitoring unit may be linked with an environment sensor which can detect the ambient temperature, the brightness and/or the presence of said user in the kitchen. The emergency parameters as well as the environment parameters detected by said safety and environment sensors may also be considered when generating the user profile.

By using said environment and safety parameters the monitoring unit can detect emergencies. Furthermore, said safety sensor as well as said environment sensor can warn the user and said monitoring unit can automatically take palliative actions. Moreover, the monitoring unit can detect oversights by combining information from said environment and safety sensor as well as operational parameters and user habits.

The signal transmission between said monitoring unit and said safety sensor and/or environment sensor may preferably take place in a bi-directional way, and especially by using power line, through the mains or by radio frequency.

In the following two embodiments of the invention are described with respect to the figures, in which
- figure 1: shows in a diagram block the assembly according to the first embodiment;
- figure 2: shows a user profile in tabular form generated by said monitoring unit; and
- figure 3: shows the assembly according to the second embodiment.

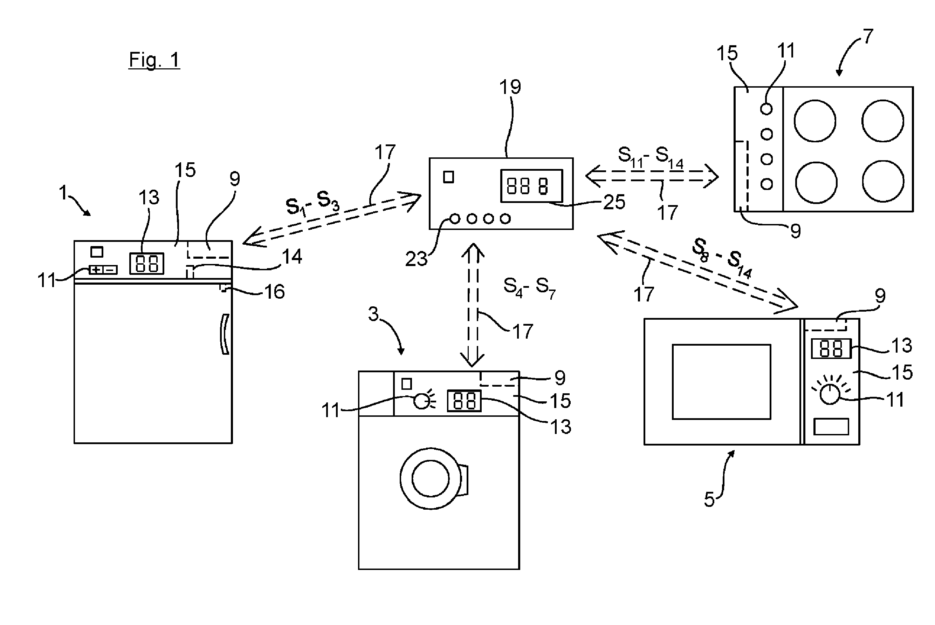

In figure 1 an assembly for monitoring a set of household appliances according to the first embodiment is shown. The set of household appliances comprises a refrigerator 1, a dish washer 3, a microwave oven 5 as well as a cooking hob 7 usually installed in a kitchen. Each of said household appliances 1, 3, 5 and 7 comprises a control unit 9 by which the operation of said household appliances can be controlled. Said control unit 9 is in connection with operational and display elements 11, 13 which are carried in a control panel 15 of each of said household appliances. Thus, a target temperature of said refrigerator 1 can be set by actuating the operational elements 11. The predefined target temperature can be indicated in the display element 13 of said control panel 15. On the base of the predefined target temperature the control unit 9 can, for example, switch a (not shown) compressor of a refrigeration circle on or off.

In addition, the refrigerator 1 comprises a product sensor 16 which detects products inserted into the refrigerator as well as products removed from the refrigerator 1. Apart from that, the refrigerator 1 comprises a door sensor 14 which can detect information about door openings, i.e. the frequency as well as the time of the door openings. Both sensors 14, 16 are linked with the control unit 9.

In the dish washer 3 the user may predefine, via the operational elements 11, different washing programs as well as the rotational speed and/or the process temperature during the operation. On the base of this setting the control unit 9 may control the components of said washing machine 3.

In the microwave oven 5 the user may predefine cooking programs by means of the operational element 11. The cooking programs set by the user can be indicated in the display elements 13. The cooking hob 7 comprises four cooking zones 7a, 7b, 7c, 7d whose heat output can be set by actuating the operational elements 11. Accordingly, said heat output of the cooking zones 7a to 7d can be regulated by actuating the operational elements 11.

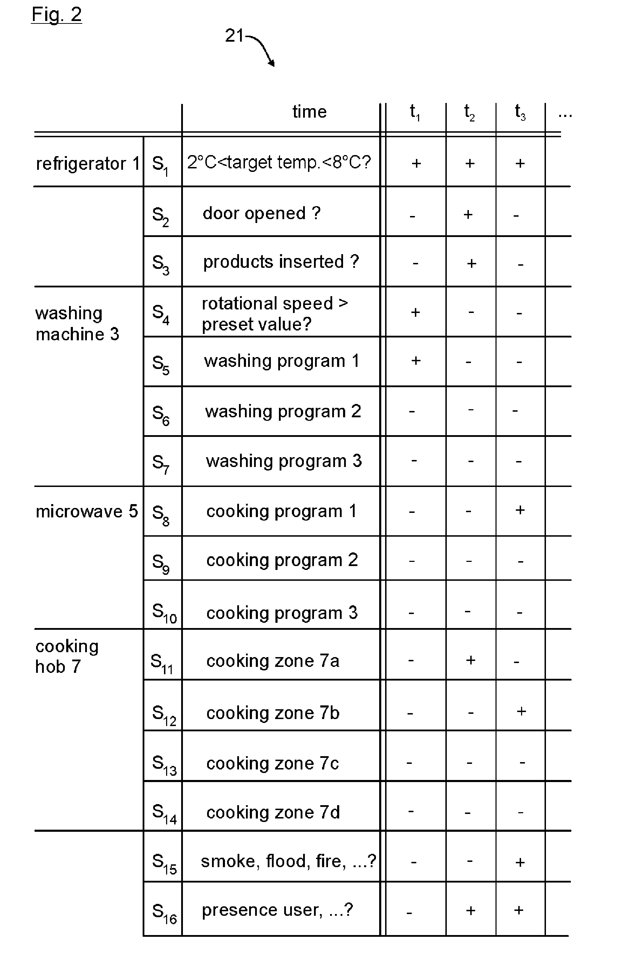

As is shown in figure 1, the control units 9 of said household appliances 1, 3, 5, 7 are in wireless connection 17 with a central monitoring unit 19. By means of the monitoring unit 19 a user profile 21 shown in figure 2 is generated. By said user profile 21 statistical information about user habits and/or behaviors over the time can be detected. This means, that user habits are detected depending on the time of the day, day of the week and/or the date.

For generating the user profile 21 different operational and/or product parameters are forwarded from said control units 9 of said household appliances 1, 3, 5, 7 - via said wireless signal transmission 17 - to said central monitoring unit 19. These parameters are stored in tabular form depending on the time and indicated as S₁ to S₁₄. As shown in figure 2 in detail, the control unit 9 of the refrigerator 1 detects the parameter S₁ which refers to information about whether the target temperature is in a regular range between 2°C and 5°C. The further parameter S₂ refers to information about whether the door opening time is more than a preset time (in this case two minutes). The parameter S₃ refers to information about which goods are introduced into the refrigerator or are taken out from the refrigerator 1.

Also, the parameters S₄ to S₇ are listed in said user profile 21 which relate to the washing machine 3. The parameter S₄ refers to information about whether the rotational speed is more than a preset limit. The parameters S₅ to S₇ refer to information about which of the washing programs 1, 2 or 3 are set by the user.

Moreover, in said user profile 21 parameters S₈ to S₁₀ are listed which relate to the microwave oven 5. The parameters S₈ to S₁₀ refer to information about which cooking program 1, 2, 3 has been selected by the user. Finally, the parameters S₁₁ to S₁₄ refer to information about which cooking zone 7a to 7d of said cooking hob 7 has been activated by the user.

Said parameters S₁ to S₁₄ can be tracked any determined times. Alternatively or in addition, this periodical scan can occur under certain conditions, e.g. when the user has entered the kitchen.

On the base of the user profile 21 the monitoring unit 19 can make predictions as to which times of the day the different household appliances are taken into operation by the user. For example, it can be determined that the user starts preparing lunch or dinner at a certain time. In case no interaction is detected at said predicted time (i.e. no door opening of the refrigerator, no activated cooking zone 7a to 7d, etc.), the monitoring unit 19 may generate a warning signal.

According to figure 1, the monitoring unit also includes operational and display elements 23, 25 by which the user can operate the household appliances 1, 3, 5, 7 remotely without directly operating said household appliances.

On the base of said user profile 21 generated by said monitoring unit 19 the monitoring unit 19 can automatically adapt or configure the operational status of said household appliances on certain times of the day or of the week.

Alternatively and/or in addition, the monitoring unit 19 may prepare suggestions for certain kind of settings of the household appliances. Such suggestions may be indicated in said display element 25. This enables the user to correct the settings as suggested by the monitoring unit 19 or to accept them.

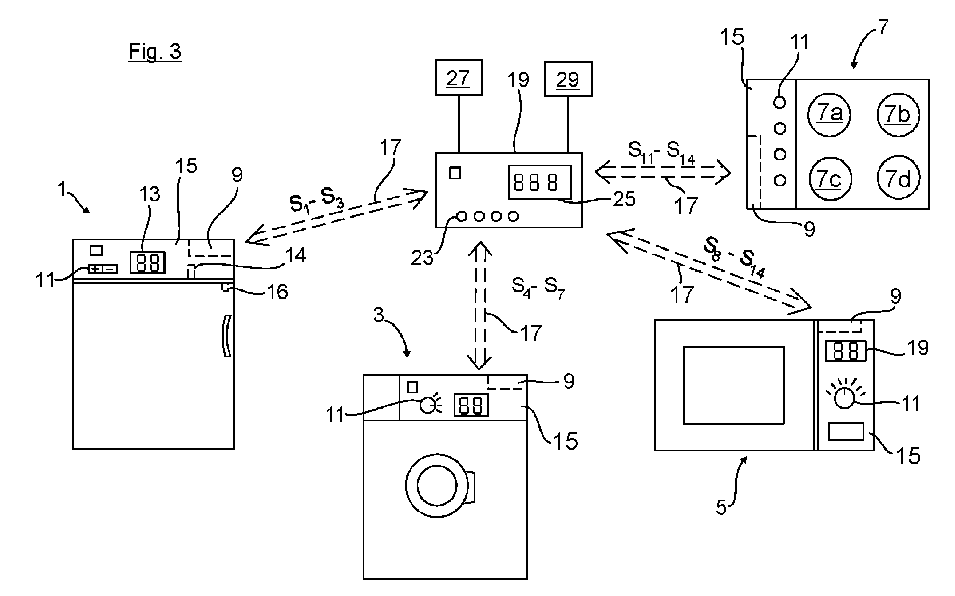

In figure 3 the assembly according to the second embodiment is shown. The assembly shown in figure 3 is essentially the same as shown in figure 1. In contrast to figure 1, the monitoring unit 19 of figure 3 is linked with a safety sensor 27 as well as an environment sensor 29 which are in wireless connection with said monitoring unit 19.

By means of said safety sensor 27 an emergency parameter S₁₅ can be detected as shown in figure 2. The emergency parameter S₁₅ provides information about fume, fire and/or flood in the kitchen. By means of said environment sensor 29 an environment parameter S₁₆, e.g. the ambient temperature, the brightness and/or the presence of the user in the kitchen may be detected.

Said environment and emergency parameters S₁₅, S₁₆ are considered in said user profile 21 as well. Due to this, said monitoring unit 19 may also detect emergency situations on which basis the monitoring unit may warn the user or may switch off the household appliances automatically.

### LIST OF REFERENCES

- 1: refrigerator
- 3: washing machine
- 5: microwave oven
- 7: cooking hob
- 7a to 7d: cooking zones
- 9: control unit
- 11, 13: operational and display elements
- 15: control panel
- 14: door sensor
- 16: product sensor
- 17: signal transmission
- 19: monitoring unit
- 21: user profile
- 23, 25: operational and display elements
- 27: safety sensor
- 29: environment sensor
- S₁ to S₁₄: operational and/or product parameters
- S₁₅: emergency parameters
- S₁₆: environment parameters

## Claims

1. Assembly for monitoring a set of household appliances (1, 3, 5, 7) each of which comprises a control unit (9) which can detect operational and/or product parameters (S₁ to S₁₄) of the household appliances (1, 3, 5, 7), **characterized in that** the household appliances (1, 3, 5, 7) are linked to a central monitoring unit (19) which generates a user profile (21) on the base of said operational and/or product parameters (S₁ to S₁₄) detected by the control units (9) of the household appliances (1, 3, 5, 7), in which user profile (21) said parameters (S₁ to S₁₄) are stored depending on the time (t) and by which user profile (21) the handling of the household appliances (1, 3, 5, 7) by the user is simplified.

2. Assembly according to claim 1, **characterized in that** said monitoring unit (19) is located separately from said household appliances (1, 3, 5, 7), and is especially linked with said household appliances by powerline, through the mains, by radiofrequency or any other wireless connection (17) and a signal transmission (17) between the monitoring unit (19) and said household appliances (1, 3, 5, 7) takes place in a bi-directional way.

3. Assembly according to claim 1 or 2, **characterized in that** said monitoring unit (19) automatically controls the operation of said household appliances (1, 3, 5, 7) on the base of said user profile (21) and especially depending on the time of the day, day of the week and/or date.

4. Assembly according to one of claims 1 to 3, **characterized in that** said monitoring unit (19) suggests settings of said household appliances (1, 3, 5, 7) on the base of said user profile (19) which settings may be corrected and/or accepted by said user.

5. Assembly according to one of the preceding claims, **characterized in that** said monitoring unit (19) generates a warning signal if detected parameters (S₁ to S₁₄) deviate from said user profile (21).

6. Assembly according to one of the preceding claims, **characterized in that** each of said household appliances (1, 3, 5, 7) comprises operational and/or display elements (11, 13) by which said household appliances can be operated and said monitoring unit (19) comprises operational and/or display elements (23, 25) by which said household appliances (1, 3, 5, 7) can be operated without directly using the operational and/or display elements (11, 13) of said household appliances (1, 3, 5, 7).

7. Assembly according to one of the preceding claims, **characterized in that** in case of a refrigerator (1) a target temperature of a cooling compartment of said refrigerator, information about door openings as well as information about inserting and removing products or the like can be detected as operational and/or product parameters (S₁ to S₃).

8. Assembly according to one of the preceding claims, **characterized in that** in case of a washing machine (3) the washing program, the rotational speed or the like set by the user can be detected as operational parameters (S₄ to S₇).

9. Assembly according to one of the preceding claims, **characterized in that** in case of a cooking device (5) information about whether the cooking device (5) is activated and/or about the heat output set by the user and/or a cooking program set by the user or the like can be detected as operational parameters (S₈ to S₁₄).

10. Assembly according to one of the preceding claims, **characterized in that** in case of a dish washer the washing program set by the user and/or information about dishes inserted or the like can be detected as operational and/or product parameters.

11. Assembly according to one of the preceding claims, **characterized in that** said monitoring unit (19) is linked with a safety sensor (27) by which an emergency parameter (S₁₅) is detected, for example smoke, flood, fire.

12. Assembly according to one of the preceding claims, **characterized in that** said monitoring unit (19) is linked with an environment sensor (29) which detects environment parameters (S₁₆), for example the ambient temperature, the brightness and/or the presence of said user in the kitchen.

13. Assembly according to claim 13 or 14, **characterized in that** said monitoring unit (19) generates the user profile (21) by considering the environment parameter (S₁₆) and/or the emergency parameter (S₁₅) detected by said safety sensor (27) and/or said environment sensor (29).

14. Assembly according to one of claims 13, 14 or 15, **characterized in that** a signal transmission between said monitoring unit (19) and said safety sensor (27) and/or environment sensor (29) takes place in a bi-directional way, especially by using powerline, through the mains or by radiofrequency.

15. Method for monitoring a set of household appliances especially carried out by an assembly according to one of the preceding claims.
